Europäisches Patentamt

(19) **European Patent Office**

**Office européen des brevets**

(11) Publication number: **0 020 371**
B1

(12) **EUROPEAN PATENT SPECIFICATION**

(45) Date of publication of patent specification: **08.06.83**

(51) Int. Cl.³: **B 60 P 1/00, B 65 G 67/02**

(21) Application number: **79900979.0**

(22) Date of filing: **19.12.78**

(86) International application number:
**PCT/US78/00235**

(87) International publication number:
**WO 80/01266 26.06.80 Gazette 80/14**

(54) **VEHICLE HAVING AN ENTRANCE RAMP.**

(43) Date of publication of application:
**07.01.81 Bulletin 81/1**

(45) Publication of the grant of the patent:
**08.06.83 Bulletin 83/23**

(84) Designated Contracting States:
**CH DE FR GB SE**

(56) References cited:
**FR - A - 2 338 833**
**US - A - 1 717 303**
**US - A - 1 884 513**
**US - A - 2 797 104**
**US - A - 3 730 361**
**US - A - 4 022 337**
**US - A - 4 027 807**
**US - A - 4 033 429**
**US - A - 4 058 228**
**US - A - 4 131 209**

(73) Proprietor: MANNING, Donald Lee
4002 Normanwood Drive
Orchard Lake, MI 48033 (US)

(72) Inventor: MANNING, Donald Lee
4002 Normanwood Drive
Orchard Lake, MI 48033 (US)

(74) Representative: Wisher, Michael Frederick
Urquhart-Dykes & Lord 47 Marylebone Lane
London W1M 6DL (GB)

Courier Press, Leamington Spa, England

Vehicle having an entrance ramp

Technical Field

My invention relates to vehicle entrance-ways and exitways and particularly to ramps associated therewith for facilitating the passage therethrough of wheelchairs and the like.

Background Art

Although there has long been a need for an extendable ramp at the entranceway of a motor bus, for example, over which a wheelchair passenger may propel himself in entering or leaving the vehicle at a bus stop, no one to my knowledge has heretofore devised a practical device of this type which is power operated, simple in design and low in cost, and controllable by the vehicle operator without leaving his seat.

Although wheelchair ramps which can be manually slid out through a side doorway of a vehicle are known in the prior art, as for example the two U.S. Patents No. 1,717,303 and No. 1,884,513 to Barclay, the U.S. Patent No. 3,730,361 to Haynes and FR—A— 2,338,833 as disclosed in the precharacterising part of claim 1, their operation was cumbersome and could only be effected from a position outside of the vehicle. Also none of these prior devices either utilized a portion of the ramp in its stowed position as a step, or provided for the step riser to swing upwardly so as to extend the ramp surface to the vehicle floor in the extended position of the ramp.

Disclosure of Invention

It is therefore among the principal objects of my invention to provide a power operated ramp as defined in claim 1 to facilitate wheelchair passengers and the like in entering and leaving a vehicle, such as a motor bus; to provide such a ramp which is normally stowed below the vehicle floor adjacent an entranceway to the vehicle, and, when extended, moves outwardly through the entranceway and automatically tilts upwardly toward its inner end to provide a rigid inclined platform leading to the sidewalk or roadway exteriorly of the vehicle; to provide such a ramp whose extendable end portion is spaced below the vehicle floor to serve as a step for other persons entering the vehicle when the ramp is in its stowed position; to provide such a ramp including a normally vertical step riser in the vehicle entranceway which swings upwardly about the adjacent edge of the vehicle floor to form the innermost end portion of the ramp when the ramp is in its fully extended position; and to provide such a ramp whose extending and retracting movements are power actuated by a lead screw extending longitudinally of the ramp and threadedly engaging a nut mounted to the step riser.

The means by which the above stated objects and advantages of my invention are realized will be clearly understood from the following description of a preferred embodiment thereof selected for purposes of illustration, having reference to the drawings, wherein:

Brief Description of Drawings

FIGURE 1 is a perspective view of a motor bus having a side entranceway equipped with my improved ramp, the latter being shown in its stowed position.

FIGURES 2 and 3 are views similar to Figure 1, but showing the ramp partially and fully extended, respectively.

FIGURE 4 is an enlarged view showing a portion of the bus in transverse vertical section through the entranceway, the ramp and its associated parts being seen in the stowed position of Figure 1.

FIGURE 5 is a view similar to Figure 4 but showing the ramp fully extended with its outward end resting on a sidewalk, as seen in solid lines, or, as seen in broken lines, on the roadway adjacent the bus.

FIGURE 6 is a further enlarged fragmental view, similar to Figures 4 and 5, but showing the riser and other associated parts of the ramp in greater detail and at positions intermediate those of Figures 4 and 5.

FIGURES 7 and 8 enlarged detail sectional views taken in the directions of the arrows 7—7 of Figure 4 and 8—8 of Figure 6, respectively.

Best Mode for Carrying Out the Invention

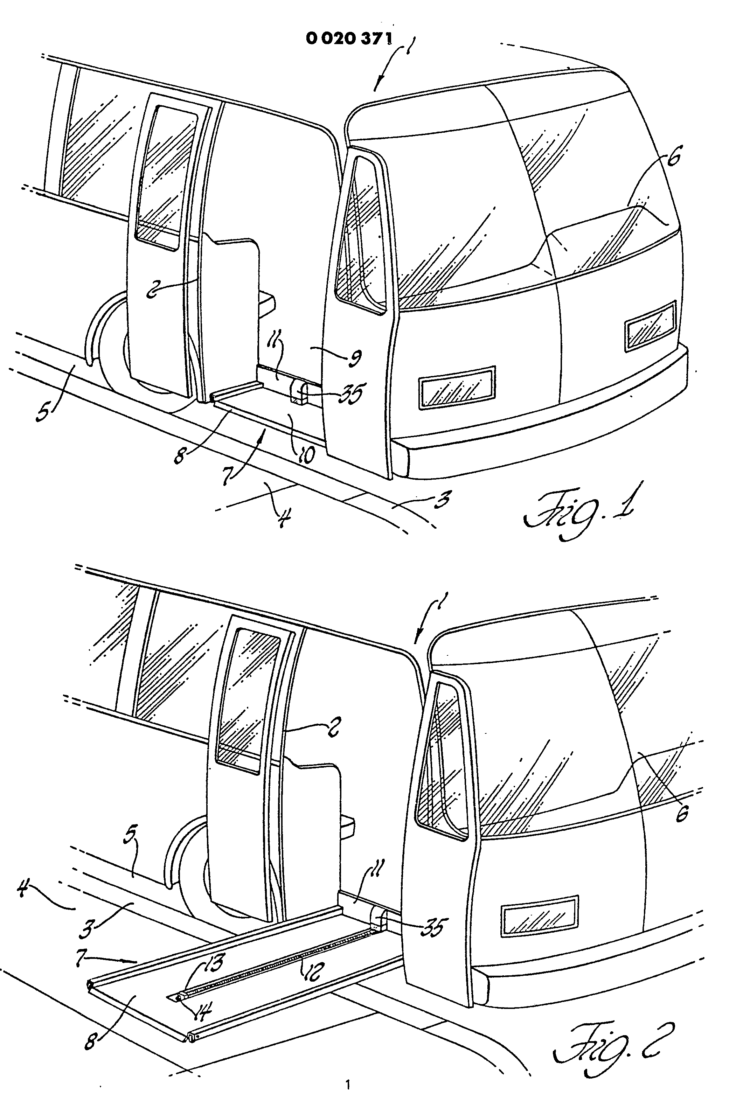

A vehicle such as a motor bus 1, whose general configuration is best seen in Figures 1, 2 and 3, has an entranceway or door opening 2 through which passengers may enter or leave the vehicle when it is stopped for that purpose adjacent a curb 3 and adjoining sidewalk 4 bordering the roadway 5. In the particular vehicle illustrated this door opening is located in the right hand side thereof, laterally opposite the operator's station 6 which is at the front end on the left hand side of the vehicle.

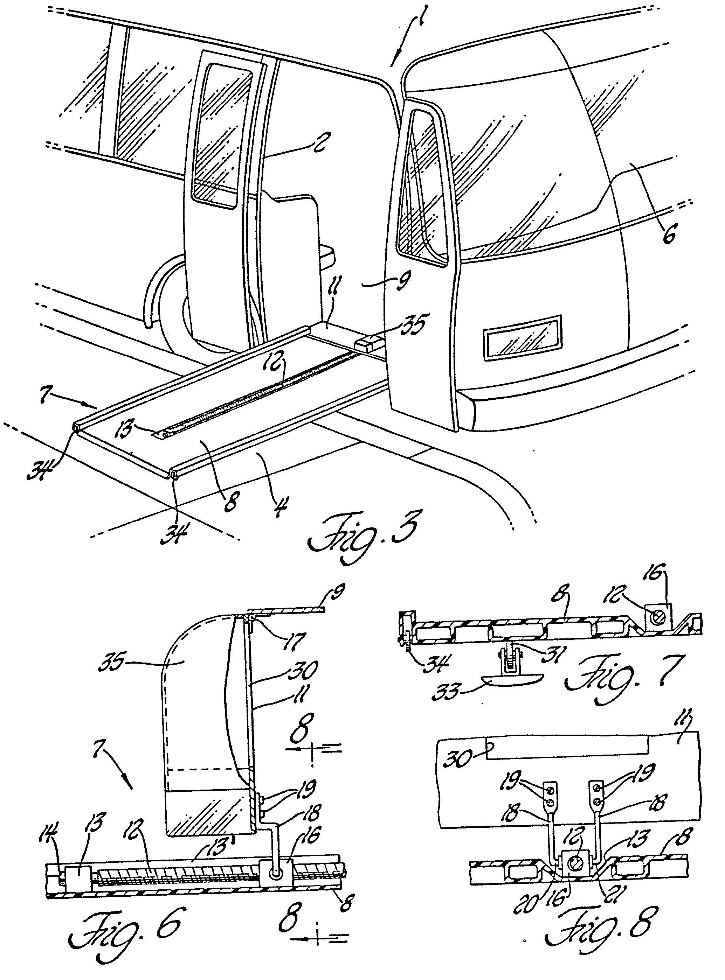

Extendable through the door opening 2, primarily for the convenience of wheelchair passengers, is a ramp which is designated generally by the numeral 7. This ramp includes a main platform-like rigid member 8 of generally rectangular shape which, in its stowed position (Figures 1 and 4), has the major portion of its length disposed under the vehicle floor 9. When thus stowed, however, a portion of this ramp member projects laterally outward toward the door opening to form a step 10 for use of other passengers in boarding and alighting from the vehicle. Extending between the edge of the vehicle floor laterally opposite the door opening and this step forming portion of the platform member 8 is a riser 11 which swings to a position co-planar with the member 8 as the ramp 7 reaches its fully extended position (Figures 3 and 5), such swinging movement of the riser being accompanied by upward tilting movement of the member 8 toward the vehicle floor.

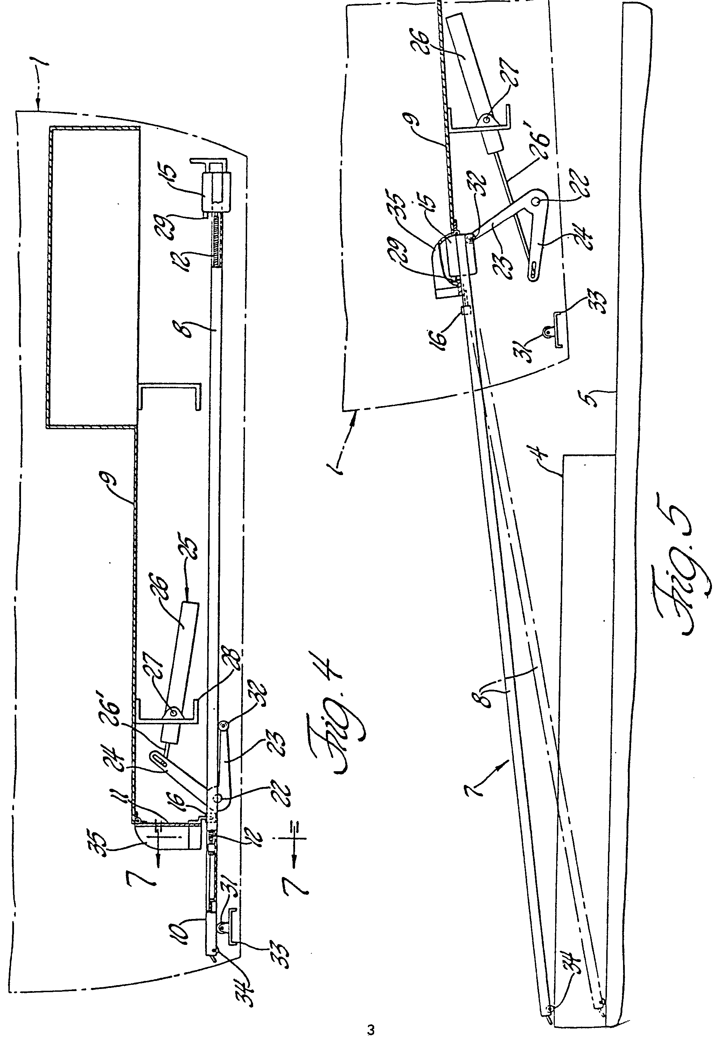

Longitudinal movement of the ramp member 8 between its stowed and extended positions is power actuated by a lead screw 12 which is recessed within an upwardly facing groove 13, best seen in Figures 7 and 8, provided generally centrally in the upper face of the member 8 and extending longitudinally thereof from its innermost end. This groove terminates short of the outermost end of the ramp member 8 so as not to extend outwardly beyond the riser 11 when the ramp is in its stowed position. A thrust bearing 13, mounted to the ramp member 8 within this groove, serves to journal the outward end of the lead screw and support it against relative longitudinal movement with the member 8. The outermost end of the lead screw adjacent the bearing 13 is provided with wrench flats 14 to enable manual rotation of the lead screw in the event of a power failure.

At its innermost end the lead screw is supported and rotatively driven by a reversible rotary motor 15 which is mounted to the ramp member 8. Intermediate of the bearing 13 and motor 15 the lead screw extends through and is threadedly engaged by a nut 16 having a connection to the vehcile floor. The latter connection, as best seen in Figures 6 and 8, includes the riser 11 whose upper extremity has a hinged connection 17 to the vehicle floor adjacent the edge thereof nearest the door opening, and a pair of brackets 18 which are attached, as by screws 19, to the back of the riser and have oppositely inturned lower leg portions 20, 21 journalably received in circular openings provided therefor in opposite sides of the nut 16.

Suitably pivoted, as by the pin 22, to the vehicle is a bell crank having one arm 23 underlying the ramp member 8 and a second arm 24 which is connected to a power actuator 25. This power actuator is shown for purposes of illustration as being in the form of a fluid pressure motor having a cylinder 26 pivotally connected by a pin 27 to a frame member 28 of the vehicle and having a piston rod 26′ pivotally connected to the bell crank arm 24, so that when fluid pressure is applied within the cylinder 26 the rod 29 will move outwardly thereof and rotate the bell crank from its position shown in Figure 4 to the position shown in Figure 5, thereby raising the inward end of the ramp member 8 toward the level of the vehicle floor 9. A microswitch 29 is preferably provided on the housing of the rotary motor 15, for actuation when the motor 15 moves into abutment with the back side of the riser 11 during outward actuation of the ramp member 8 by the lead screw 12. This microswitch serves to both interrupt the power supply to the lead screw motor 15 and to initiate introduction of fluid pressure to the cylinder 26 of the bell crank actuator. During the resultant upward tilting movement of the ramp member the riser 16 is also caused to swing upwardly and outwardly toward the door opening about its hinged connection 17 to the vehicle floor. Simultaneously therewith, the brackets 18, whose inturned leg portions are journalled in the nut 16, effect a further laterally outward extending movement of the ramp member 8 until the ramp member and riser reach their co-planar relation with each other seen in Figures 3 and 5. As best seen in Figures 6 and 8, the central portion of the riser has an opening 30 therein, into which the upper portion of the lead screw motor 15 is recessed when the riser and ramp member are in such co-planar relation.

Suitable anti-friction means, such as rollers 31 and 32, journalled on the vehicle side frame member 33 and on the bell crank arm 23, respectively, are provided for rollably supporting the ramp member in the vehicle. Other rollers 34 may also be journalled in the outer end of the ramp member 8 for reducing frictional drag between it and the surface of the sidewalk 4 or roadway 5 during deployment and retraction of the ramp. Also if desired, a lamp 35 may be hinged to the riser over the opening 30 therein, to both conceal the latter and illuminate the ramp member.

It will be appreciated that relatively simple circuitry (not shown) will enable control of the lead screw motor 15 by the vehicle operator from his regular seated position, whereby the lead screw may first be rotated in one direction to effect extension of the ramp for use by a wheelchair passenger desiring to leave or board the bus at a bus stop, following which the lead screw may then be rotated in the reverse direction to retract the ramp.

Although I have above described and illustrated in the drawings what is believed to be the best mode of carrying out my invention, it is recognized that various minor changes in the parts and their arrangement may be made without departing from the scope of the invention as hereinafter claimed.

**Claims**

1. A vehicle having a retractable ramp member (7) of the type which includes a door opening (2), a floor (9) within the vehicle opposite said opening, a vehicle frame underlying said floor, the ramp member being movable through said opening from a stowed position under said frame to an extended position laterally of said floor, the end of said ramp innermost of the vehicle being lifted into a generally co-planar relationship with the floor when the ramp has been fully extended from its normally stowed position under the floor, characterised by

A. a lead screw (12) journalled in the ramp member (7) for longitudinal movement therewith through said opening;

B. a motor (15) mounted on the ramp member (7) and drivingly connected to axially rotate the lead screw (12);

C. a nut (16) threadedly engaging the lead screw (12) and connected to the floor (9) for effecting longitudinal movement of the screw and ramp member when said motor is energized;

D. said door opening (2) being spaced from the adjacent lateral extremity of said floor;

E. said ramp member (7) in its stowed position being spaced below said floor (9) and projecting to the door opening (2) to form a step;

F. a riser (11) for said step, said riser having a hinged connection (17) to the floor accommodating swinging movement of the riser toward the door opening;

G. said nut (16) being connected to the floor by said riser and having a hinged mounting (18) on the riser accommodating said swinging movement of the riser during outward movement of the ramp member and lead screw through the door opening; and

H. an actuator mechanism (22 through 33) for elevating the end of the ramp member innermost of the vehicle into substantially co-planar relationship with the riser when the ramp member has been fully extended from its normally stowed position under the floor.

2. A vehicle according to Claim 1 wherein said actuator mechanism comprises a bell crank (23—24) pivotally mounted (22) in the vehicle below the ramp member, said bell crank having an arm (23) extending into abutment with the underside of the ramp member, and a power actuator (26) for rotating said bell crank in the ramp-elevating direction.

3. A vehicle according to Claim 2, including vehicle mounted roller means (31) underlying said ramp member adjacent the door opening, and other roller means (32) at the ramp-abutting end of said bell crank arm.

4. A vehicle according to Claim 2 wherein said bell crank includes a second arm (24), said power actuator being mounted to the vehicle below the floor and operatively connected to said second arm for effecting rotation of said bell crank.

**Revendications**

1. Véhicule équipé d'un élément de rampe rétractable (7), du type comprenant une ouverture de porte (2), un plancher (9) venant, dans le véhicule, en face de cette ouverture, un châssis de véhicule venant au-dessous de ce plancher, l'élément de rampe pouvant se déplacer par cette ouverture de manière à passer d'une position de rangement sous le châssis à une position déployée latéralement par rapport au plancher, l'extrémité de la rampe située vers l'intérieur du véhicule, se soulevant pour venir dans une position générale située dans le même plan que le plancher lorsqu'on a complètement déployé la rampe à partir de sa position normale de rangement sous le plancher, véhicule caractérisé en ce qu'il comprend:

A. une vis d'entraînement (12) montée en rotation dans l'élément de rampe (7) pour pouvoir se déplacer longitudinalement avec celle-ci à travers l'ouverture;

B. un moteur (15) monté sur l'élément de rampe (7) et relié, par une liaison d'entraînement, à la vis d'entraînement (12) pour faire tourner celle-ci axialement;

C. un écrou (16) se vissant sur la vis d'entraînement (12) et se reliant au plancher (9) pour produire le mouvement longitudinal de la vis et de l'élément de rampe lorsque le moteur est excité;

D. l'ouverture de porte (2) étant placée à une certaine distance de l'extrémité latérale adjacente du plancher;

E. l'élément de rampe (7) en position de rangement se situant à une certaine distance au-dessous du plancher (9) et faisant saillie par l'ouverture de porte (2) de manière à former une marche;

F. une contremarche (11) de la marche, cette contremarche étant reliée au plancher par une articulation de liaison (17) de manière à pouvoir basculer vers l'ouverture de porte;

G. l'écrou (16) étant relié au plancher par la contremarche et comportant une monture articulée (18) sur cette contremarche de manière à permettre le mouvement de basculement de celle-ci pendant le mouvement de l'élément de rampe et de la vis d'entraînement vers l'extérieur, à travers l'ouverture de porte; et

H. un mécanisme de manoeuvre (22 à 33) destiné à soulever l'extrémité de l'élément de rampe située vers l'intérieur du véhicule pour amener cette extrémité dans le même plan que la contremarche lorsque l'élément de rampe a été complètement déployé à partir de sa position normale de rangement sous le plancher.

2. Véhicule selon la revendication 1, caractérisé en ce que le mécanisme de manoeuvre comprend un levier coudé (23—24) monté en pivotement (22) dans le véhicule, au-dessous de l'élément de rampe, ce levier coudé comportant un bras (23) venant buter contre la face inférieure de l'élément de rampe, et un organe de commande automatique (26) destiné à faire tourner ce levier coudé dans le sens de soulèvement de la rampe.

3. Véhicule selon la revendication 2, caractérisé en ce qu'il comprend des moyens de roulement (31) montés au-dessous de l'élément de rampe au voisinage de l'ouverture de porte, et d'autres moyens de roulement (32) à l'extrémité du bras de levier coudé venant en butée contre la rampe.

4. Véhicule selon la revendication 2, caractérisé en ce que le levier coudé comporte un second bras (24), l'organe de manoeuvre automatique étant monté sur le véhicule au-dessous du plancher et se reliant en fonctionnement à ce second bras pour faire tourner le levier coudé.

## Patentansprüche

1. Mit einer einfahrbaren Auffahr-Rampe (7) versehenes Fahrzeug, das eine Türöffnung (2) und einen im Fahrzeug gegenüber der Türöffnung befindlichen Boden (9) aufweist, der auf einem Fahrzeugrahmen angeordnet ist, wobei die Auffahr-Rampe aus einer verstauten Lage unter dem Fahrzeugrahmen durch diese Türöffnung in eine ausgefahrene Lage quer zum Boden bewegbar ist, in der das im Fahrzeug befindliche innere Ende im vollständig ausgefahrenen Zustand der Auffahr-Rampe in eine mit dem Boden im wesentlichen gleiche Ebene angehoben ist, gekennzeichnet durch folgende Merkmale:

A. Eine mit der Auffahr-Rampe (7) durch die Türöffnung (2) bewegbare Leitspindel (12) ist in der Auffahr-Rampe gelagert;

B. ein auf der Auffahr-Rampe (7) angeordneter Motor (15) steht mit der Leitspindel (12) zwecks ihrer axialen Drehung in getrieblicher Verbindung;

C. eine mit der Leitspindel (12) in Eingriff befindliche Gewindenuß (16) ist mit dem Boden (9) verbunden zwecks Längsbewegens der Leitspindel und damit der Auffahr-Rampe (7) beim Einschalten des Motors (15);

D. die Türöffnung (2) ist im Abstand von der seitlichen Begrenzung des Bodens (9) angeordnet;

E. die Auffahr-Rampe (7) ist in der verstauten Lage unterhalb des Bodens (9) angeordnet und ragt ein Trittbrett bildend in die Türöffnung (2);

F. eine Setzstufe (11) ist für das Trittbrett vorgesehen und über eine gelenkige Verbindung (17) mit dem Boden (9) verbunden, um ein Schwenken gegen die Türöffnung (2) zu ermöglichen;

G. die Gewindenuß (16) ist über die Setzstufe (11) mit dem Boden (9) verbunden und weist ein gelenkiges, das Schwenken der Setzstufe während des Ausfahrens der Auffahr-Rampe (7) und der Leitspindel (12) durch die Türöffnung (2) ermöglichendes Lager (18) auf; und

H. ist ein Betätigungsmechanismus (22 bis 33) vorgesehen für das Anheben des dem Fahrzeuginneren zugewandten Endes der Auffahr-Rampe (7) in eine mit dem Boden (9) im wesentlichen gleiche Ebene, wenn die Auffahr-Rampe aus der normalerweise unter dem Boden verstauten in die vollständig ausgefahrene Position überführt ist.

2. Fahrzeug nach Anspruch 1, dadurch gekennzeichnet, daß der Betätigungsmechanismus (22 bis 33) einen drehbeweglich unterhalb der Auffahr-Rampe (9) am Fahrzeug gelagerten Winkelhebel (23, 24) umfaßt, der einen an einem Widerlager an der Unterseite der Auffahr-Rampe angreifenden Arm (23) und einen Kraftantrieb (26) für das Drehen des Winkelhebels in die die Auffahr-Rampe anhebende Richtung aufweist.

3. Fahrzeug nach Anspruch 2, dadurch gekennzeichnet, daß am Fahrzeug unterhalb der Auffahr-Rampe (9) und benachbart zur Türöffnung (2) gelagerte Rollen (31) und weitere im Bereiche des mit dem Widerlager der Auffahr-Rampe in Verbindung stehenden Arms des Winkelhebels angeordnete Rollen (32) vorgesehen sind.

4. Fahrzeug nach Anspruch 2, dadurch gekennzeichnet, daß der Winkelhebel einen zweiten Arm (24) aufweist, der für das Drehen des Winkelhebels mit dem unterhalb des Bodens (9) gelagerten Kraftantrieb in Wirkverbindung steht.

*Fig. 1*

*Fig. 2*

Fig.3

Fig. 6

Fig. 7

Fig. 8

Fig. 4

Fig. 5

3